# EUROPÄISCHE PATENTANMELDUNG

(11) **EP 4 060 377 A1**
(43) Veröffentlichungstag der Anmeldung: **21.09.2022**
(21) Anmeldenummer: 22159475.7
(22) Anmeldetag: 01.03.2022
(51) Int. Cl.: G01S 7/497, G01S 17/42, G01S 17/894, G01S 7/48, G01S 7/481

(54) **VORRICHTUNG UND VERFAHREN ZUR ISOLATION EINES TRIGGERSIGNALS EINES LIDAR-SENSORS SOWIE TESTSYSTEM**

(30) Priorität: 15.03.2021 DE 102021106220
(71) Anmelder: dSPACE GmbH, 33102 Paderborn (DE)
(72) Erfinder: Sievers, Gregor, 33102 Paderborn (DE); Schütte, Frank, 33102 Paderborn (DE); Lachmair, Jan, 33619 Bielefeld (DE); Hagemeyer, Jens, 33619 Bielefeld (DE); Schmidt, Marco, 33619 Bielefeld (DE); Himmler, Andreas, 33102 Paderborn (DE)

(57) **Zusammenfassung**

Die Erfindung betrifft eine Vorrichtung (10) und ein Verfahren zur Isolation eines Triggersignals für ein Testsystem (1) eines LiDAR-Sensors (12), mit einem in einem Signalpfad (SP) des Triggersignals (TS) vor einer Sammellinse (18) oder einem Trigger-Detektor (14) angeordneten optischen Element (20a, 20b), welches dazu ausgebildet ist, das Triggersignal (TS) passieren zu lassen und eine, insbesondere an einer Oberfläche (22) reflektierte, Rückreflexion (RTS) des durch das optische Element (20a, 20b) passierten Triggersignals (TS) zumindest teilweise zu absorbieren. Die Erfindung betrifft ferner ein Testsystem für einen LiDAR-Sensor (12) .

## Beschreibung

Die vorliegende Erfindung betrifft eine Vorrichtung zur Isolation eines Triggersignals für ein Testsystem eines LiDAR-Sensors.

Die Erfindung betrifft des Weiteren ein Testsystem für einen LiDAR-Sensor.

Die vorliegende Erfindung betrifft ferner ein Verfahren zur Isolation eines Triggersignals für ein Testsystem eines LiDAR-Sensors.

### Stand der Technik

LiDAR (Abkürzung für light detection and ranging) Lichtmesssysteme werden neben weiteren Anwendungen zur optischen Abstands- und Geschwindigkeitsmessung eingesetzt. LiDAR Lichtmesssysteme senden Licht aus und messen die Laufzeit, in der das Licht nach der Reflexion an einem Objekt wieder zum LiDAR Lichtmesssystem zurückkommt. Aus der bekannten Geschwindigkeit des Lichts folgt die Entfernung des Objekts vom LiDAR Lichtmesssystem.

Beispiele für Anwendungsbereiche von LiDAR Lichtmesssystemen sind mobile Instrumente zur optischen Entfernungsmessung und LiDAR Lichtmesssysteme für das Anwendungsfeld Automotive, nämlich Fahrerassistenzsysteme und autonomes Fahren sowie für Aerospace Anwendungen.

DE 102007057372 A1 offenbart ein Testsystem für Lidarsensoren mit einer Triggereinheit, durch welche als Reaktion auf den Empfang eines Signals eines zu testenden Lidarsensors ein Signalgenerator derart angesteuert wird, dass durch eine Signalerzeugungseinheit des Signalgenerators ein vorgegebenes synthetisch erzeugtes oder aufgezeichnetes optisches Signal ausgegeben wird.

DE 102017110790 A1 offenbart eine Simulationsvorrichtung für ein LiDAR - Lichtmesssystem mit einem LiDAR Lichtempfangssensor, wobei in der Ebene des LiDAR - Lichtempfangssensor ein Lichtsender vorhanden ist, wobei ein weiterer Lichtsender neben dem Lichtsender in der Ebene des LiDAR - Lichtempfangssensors angeordnet ist, und wobei ein Rechner die Freischaltung des LiDAR - Lichtempfangssensors und die Zeitspanne zur Abgabe eines Lichtsignals über den Lichtsender und/oder den weiteren Lichtsender überwacht und den Signaleingang des Lichtsignals von dem Lichtsender oder dem weiteren Lichtsender registriert.

Ein Problem bei dem Testen von Lidarsensoren unter Verwendung eines Signalgenerators besteht darin, dass das von einer Sendeeinheit des LiDAR Sensors emittierte Triggersignal an umgebenden Oberflächen wie beispielsweise der Triggereinheit, d.h. der Empfängereinheit der Simulationsvorrichtung, reflektiert und somit von einer Empfängereinheit des LiDAR Sensors detektierbar ist, was zu unerwünschten Detektionsergebnissen bzw. einer Verfälschung der durch den Signalgenerator erzeugten synthetischen Reflexion des Triggersignals führen kann.

Demzufolge besteht ein Bedarf, bestehende Vorrichtungen und Verfahren zum Testen eines LiDAR-Sensors dahingehend zu verbessern, dass eine effektive Isolation des Triggersignals ermöglicht wird.

Es ist daher Aufgabe der Erfindung, eine Vorrichtung und ein Verfahren zur Isolation eines Triggersignals eines LiDAR-Sensors sowie ein entsprechendes, die Vorrichtung verwendendes Testsystem vorzusehen, welche eine effektive Isolation des Triggersignals ermöglichen.

### Offenbarung der Erfindung

Die Aufgabe wird erfindungsgemäß durch eine Vorrichtung zur Isolation eines Triggersignals für ein Testsystem eines LiDAR-Sensors mit den Merkmalen des Patentanspruchs 1 gelöst.

Die Aufgabe wird erfindungsgemäß ferner durch ein Testsystem für einen Lidar-Sensor mit den Merkmalen des Patentanspruchs 12 gelöst.

Die Aufgabe wird erfindungsgemäß ferner durch ein Verfahren zur Isolation eines Triggersignals für ein Testsystem eines LiDAR-Sensors mit den Merkmalen des Patentanspruchs 14 gelöst.

Die Erfindung betrifft eine Vorrichtung zur Isolation eines Triggersignals für ein Testsystem eines LiDAR-Sensors.

Die Vorrichtung umfasst eine mit einem Trigger-Detektor durch ein optisches Übertragungsmedium verbindbare Sammellinse oder einen Trigger-Detektor, wobei die Sammellinse oder der Trigger-Detektor dazu eingerichtet ist, ein von einem LiDAR-Sensor erzeugtes Triggersignal, insbesondere einen Laserpuls, zu empfangen.

Die Vorrichtung umfasst ferner ein in einem Signalpfad des Triggersignals vor der Sammellinse oder dem Trigger-Detektor angeordnetes optisches Element, welches dazu ausgebildet ist, das Triggersignal passieren zu lassen und eine, insbesondere an einer Oberfläche reflektierte Rückreflexion des durch das optische Element passierten Triggersignals zumindest teilweise zu absorbieren.

Die Erfindung betrifft des Weiteren ein Testsystem für einen LiDAR-Sensor. Das Testsystem umfasst einen ein Triggersignal erzeugenden LiDAR-Sensor und eine erfindungsgemäße Vorrichtung zur Isolation des Triggersignals.

Das Testsystem umfasst des Weiteren einen Signalgenerator, wobei der Trigger-Detektor dazu eingerichtet ist, in Reaktion auf den Empfang des Triggersignals des zu testenden LiDAR-Sensors den Signalgenerator anzusteuern, eine simulierte Rückreflexion des Triggersignals zu erzeugen und unter Verwendung einer vorgegebenen Anzahl von Dioden bzw. Leuchtelementen an einen Empfänger des LiDAR-Sensors auszusenden.

Die Erfindung betrifft überdies ein Verfahren zur Isolation eines Triggersignals für ein Testsystem eines LiDAR-Sensors.

Das Verfahren umfasst ein Empfangen eines durch einen LiDAR-Sensor erzeugten Triggersignals, insbesondere eines Laserpulses, durch eine durch ein optisches Übertragungsmedium mit einem Trigger-Detektor verbundenen Sammellinse oder durch einen Trigger-Detektor.

Darüber hinaus umfasst das Verfahren ein Passieren des Triggersignals durch ein in einem Signalpfad des Triggersignals vor der Sammellinse oder dem Trigger-Detektor angeordnetes optisches Element.

Des Weiteren umfasst das Verfahren ein zumindest teilweises Absorbieren einer, insbesondere an einer Oberfläche reflektierten, Rückreflexion des durch das optische Element passierten Triggersignals mittels des optischen Elements.

Eine Idee der vorliegenden Erfindung ist es, die Adaptierung eines LiDAR Over-the-Air Testsytems an den zu testenden LiDAR-Sensor zu vereinfachen, d.h. es ist keine sensorspezifische Mechanik zur Abschattung des Laserpulses notwendig. Erst durch den optischen Isolator bzw. das optische Element ist die LiDAR Over-the-Air Simulation von Multi-Laser Sensoren und monostatischer Sensorarchitekturen ohne Eingriff in die Interna des Sensors realisierbar.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass das optische Element durch einen optischen Isolator, insbesondere einen Faraday-Isolator, ausgebildet ist, wobei der optische Isolator einen Faraday-Rotator aufweist, welcher zwischen einem ersten Polarisator und einem zweiten Polarisator angeordnet ist.

Der optische Isolator lässt das Triggersignal in vorteilhafter Weise in einer ersten Richtung passieren und blockiert es weitestgehend in einer der ersten Richtung entgegensetzen zweiten Richtung.

Gemäß einer weiteren bevorzugten Weiterbildung der Erfindung ist vorgesehen, dass eine optische Achse des ersten Polarisators eine Ausrichtung aufweist, die mit einer Polarisationsebene des Triggersignals übereinstimmt, wobei der Faraday-Rotator dazu ausgebildet ist, die Polarisation des Triggersignals um 45° in eine vorgegebene Drehrichtung zu drehen, und wobei eine optische Achse des zweiten Polarisators um 45° in der vorgegebenen Drehrichtung gegenüber dem ersten Polarisator ausgerichtet ist.

Die Änderung der Polarisationsebene des Triggersignals bewirkt in vorteilhafter Weise, dass die um 45° in die vorgegebene Drehrichtung gedrehte Polarisation des Triggersignals bei Auftreffen auf die Oberfläche in Richtung des LiDAR-Sensors zurück reflektiert wird und sich somit eine aus Sicht des optischen Isolators, umgekehrte Rotationspolarisation ergibt.

Gemäß einer weiteren bevorzugten Weiterbildung der Erfindung ist vorgesehen, dass der Faraday-Rotator dazu ausgebildet ist, die Polarisation der Rückreflexion des durch den optischen Isolator passierten Triggersignals um 45° in die vorgegebene Drehrichtung zu drehen, so dass die den Faraday-Rotator passierte Rückreflexion orthogonal zur optischen Achse des ersten Polarisators ausgerichtet ist.

Aufgrund der erneuten Drehung der Polarisation des Triggersignals um 45° in die vorgegebene Drehrichtung weist die Rückreflexion des Triggersignals eine um 90° gedrehte Polarisation auf, sodass die Rückreflexion bei Auftreffen auf den ersten Polarisator im Wesentlichen blockiert wird.

Gemäß einer weiteren bevorzugten Weiterbildung der Erfindung ist vorgesehen, dass das optische Element durch ein Verzögerungselement, insbesondere eine λ/4 Wellenplatte, ausgebildet ist, welche dazu ausgebildet ist, dass durch den LiDAR-Sensor erzeugte, insbesondere linearpolarisierte, Triggersignal zu zirkularpolarisieren.

Die Zirkularpolarisation bewirkt in vorteilhafter Weise, dass die Rückreflexion des Trägersignals bei erneutem Auftreffen auf das Verzögerungselement weitestgehend gedämpft bzw. blockiert wird.

Gemäß einer weiteren bevorzugten Weiterbildung der Erfindung ist vorgesehen, dass in dem Signalpfad des Triggersignals vor dem Verzögerungselement ein Polarisator, insbesondere ein Linearpolarisator, angeordnet ist. Dies ist erforderlich, falls das von dem LiDAR-Sensor emittierte Triggersignal nicht linear polarisiert sein sollte.

Gemäß einer weiteren bevorzugten Weiterbildung der Erfindung ist vorgesehen, dass die optische Leistung der Rückreflexion des durch das optische Element passierten Triggersignals nach einem zweitmaligen Passieren durch das optische Element unterhalb einer Detektionsschwelle eines Empfängers des LiDAR-Sensors liegt.

Somit kann sichergestellt werden, dass der Empfänger des LiDAR-Sensors lediglich die von dem Signalgenerator erzeugte synthetische Rückreflexion des Triggersignals und keine tatsächliche Rückreflexion des Triggersignals empfängt.

Gemäß einer weiteren bevorzugten Weiterbildung der Erfindung ist vorgesehen, dass das optische Element dazu ausgebildet ist, eine optische Leistung des Triggersignals bei erstmaligem Durchgang durch das optische Element um 50 - 70%, insbesondere um 65%, zu dämpfen, und eine Gesamtdämpfung des Triggersignals und dessen erneut das optische Element passierenden Rückreflexion um mehr als 99%, insbesondere 99,9%, bereitzustellen.

Damit kann in vorteilhafter Weise erreicht werden, dass der verbleibende Anteil der Rückreflexion des Triggersignals unterhalb einer Detektionsschwelle des LiDAR-Sensors liegt.

Gemäß einer weiteren bevorzugten Weiterbildung der Erfindung ist vorgesehen, dass das optische Element und die Sammellinse oder der Trigger-Detektor in einer an einer Sendeeinheit des LiDAR-Sensors befestigbaren Abdeckhaube oder an einer in dem Signalpfad des Triggersignals angeordneten Trägereinrichtung angeordnet sind.

Das Vorsehen der Abdeckhaube bzw. der Trägereinrichtung ermöglicht in vorteilhafter Weise eine kompakte Anordnung der Vorrichtung zur Isolation des Triggersignals, wobei zudem erreicht wird, dass das Triggersignal ausschließlich durch das optische Element passiert bzw. dass die Rückreflexion des optischen Signals auf das optische Element auftrifft.

Gemäß einer weiteren bevorzugten Weiterbildung der Erfindung ist vorgesehen, dass der Trigger-Detektor eine vorgegebene Anzahl lichtempfindlicher Dioden aufweist, welche dazu eingerichtet sind, das empfangene Triggersignal als elektrisches Signal an einen Signalgenerator zu übertragen. Somit kann eine effektive Umsetzung des optischen Signals in ein elektrisches Signal erreicht werden.

Gemäß einer weiteren bevorzugten Weiterbildung der Erfindung ist vorgesehen, dass das optische Element zumindest im Bereich eines Öffnungswinkels der Sendeeinheit des LiDAR-Sensors angeordnet ist.

Damit kann vorteilhafter Weise sichergestellt werden, dass das von dem LiDAR-Sensor emittierte Triggersignal vollständig durch das optische Element passiert.

Gemäß einer weiteren bevorzugten Weiterbildung der Erfindung ist vorgesehen, dass der LiDAR-Sensor durch ein Flash-LiDAR oder ein mechanisch abtastendes LiDAR ausgebildet ist.

Die erfindungsgemäße Vorrichtung zur Isolation des Triggersignals ist somit mit sämtlichen gängigen Ausführungsformen von LiDAR-Sensoren einsetzbar.

Die hierin beschriebenen Merkmale der Vorrichtung zur Isolation eines Triggersignals eines LiDAR-Sensors sind ebenso auf das erfindungsgemäße Verfahren zur Isolation eines Triggersignals eines LiDAR-Sensors und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1a: eine schematische Darstellung eines Testsystems für einen LiDAR-Sensor mit einer Vorrichtung zur Isolation eines Triggersignals gemäß einer bevorzugten Ausführungsform der Erfindung;
- Fig. 1b: eine schematische Darstellung des Testsystems für den LiDAR-Sensor mit der Vorrichtung zur Isolation des Triggersignals gemäß einer weiteren bevorzugten Ausführungsform der Erfindung;
- Fig. 2: eine schematische Darstellung des Testsystems für den LiDAR-Sensor mit der Vorrichtung zur Isolation des Triggersignals gemäß einer weiteren bevorzugten Ausführungsform der Erfindung;
- Fig. 3: eine schematische Darstellung des Testsystems für den LiDAR-Sensor mit der Vorrichtung zur Isolation des Triggersignals gemäß einer weiteren bevorzugten Ausführungsform der Erfindung;
- Fig. 4: eine schematische Darstellung des Testsystems für den LiDAR-Sensor mit der Vorrichtung zur Isolation des Triggersignals gemäß einer weiteren bevorzugten Ausführungsform der Erfindung; und
- Fig. 5: ein Ablaufdiagramm eines Verfahrens zur Isolation eines Triggersignals für ein Testsystem eines LiDAR-Sensors gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

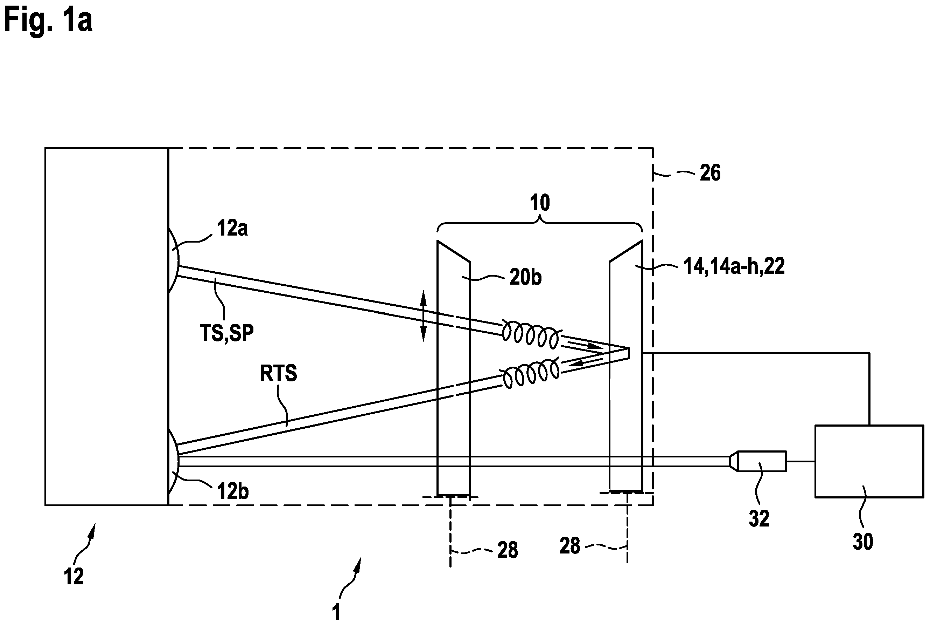

Die in Fig. 1a gezeigte Vorrichtung zur Isolation eines Triggersignals für ein Testsystem 1 eines LiDAR-Sensors 12 umfasst einen Trigger-Detektor 14, welcher dazu eingerichtet ist, ein von einem LiDAR-Sensor 12 erzeugtes Triggersignal TS, insbesondere einen Laserpuls, zu empfangen.

Die Vorrichtung umfasst ferner ein in einem Signalpfad SP des Triggersignals TS vor dem Trigger-Detektor 14 angeordnetes optischen Element 20b, welches dazu ausgebildet ist, das Triggersignal TS passieren zu lassen und eine, insbesondere an einer Oberfläche 22 reflektierte, Rückreflexion RTS des durch das optische Element 20b passierten Triggersignals TS zumindest teilweise zu absorbieren.

Das optische Element 20b ist durch ein Verzögerungselement 20b, insbesondere eine λ/4 Wellenplatte, ausgebildet, welche dazu ausgebildet ist, dass durch den LiDAR-Sensor 12 erzeugte, insbesondere linearpolarisierte, Triggersignal TS zu zirkularpolarisieren.

Die optische Leistung der Rückreflexion RTS des durch das optische Element 20b passierten Triggersignals TS nach einem zweitmaligen Passieren durch das optische Element 20b liegt dabei unterhalb einer Detektionsschwelle eines Empfängers des LiDAR-Sensors 12.

Das optische Element 20b ist dazu ausgebildet, eine optische Leistung des Triggersignals TS bei erstmaligem Durchgang durch das optische Element 20b um 50 - 70%, insbesondere um 65%, zu dämpfen. Ferner ist das optische Element 20b dazu ausgebildet, eine Gesamtdämpfung des Triggersignals TS und dessen erneut das optische Element 20b passierenden Rückreflexion RTS um mehr als 99%, insbesondere 99,9%, bereitzustellen.

Das optische Element 20b und der Trigger-Detektor 14 sind in einer an einer Sendeeinheit 12a des LiDAR-Sensors 12 befestigbaren Abdeckhaube 26 angeordnet. Alternativ kann auf die Abdeckhaube 26 beispielsweise verzichtet werden.

Alternativ können das optische Element 20b und der Trigger-Detektor 14 beispielsweise an einer in dem Signalpfad SP des Triggersignals TS angeordneten Trägereinrichtung 28 angeordnet sein.

Der Trigger-Detektor 14 weist eine vorgegebene Anzahl lichtempfindlicher Dioden 14a-14h auf, welche dazu eingerichtet sind, das empfangene Triggersignal TS als elektrisches Signal an einen Signalgenerator 30 zu übertragen.

Das optische Element 20b ist zumindest im Bereich eines Öffnungswinkels der Sendeeinheit 12a des LiDAR-Sensors 12 angeordnet. Alternativ ist das optische Element 20b auch im Bereich des Abstrahlwinkels der Sendeeinheit 32 des Signaleinheit 30 angeordnet.

Das Testsystem 1 für den LiDAR-Sensor 12 weist des Weiteren einen Signalgenerator 30 auf. Der Trigger-Detektor 14 ist dabei dazu eingerichtet, in Reaktion auf den Empfang des Triggersignals TS des zu testenden LiDAR-Sensors 12 den Signalgenerator 30 anzusteuern, eine simulierte Rückreflexion RTS des Triggersignals TS zu erzeugen und unter Verwendung einer vorgegebenen Anzahl von Dioden einer Sendeeinheit 32 des Signalgenerators 30 an einen Empfänger 12b des LiDAR-Sensors 12 auszusenden.

Der LiDAR-Sensor 12 ist durch ein Flash-LiDAR ausgebildet.

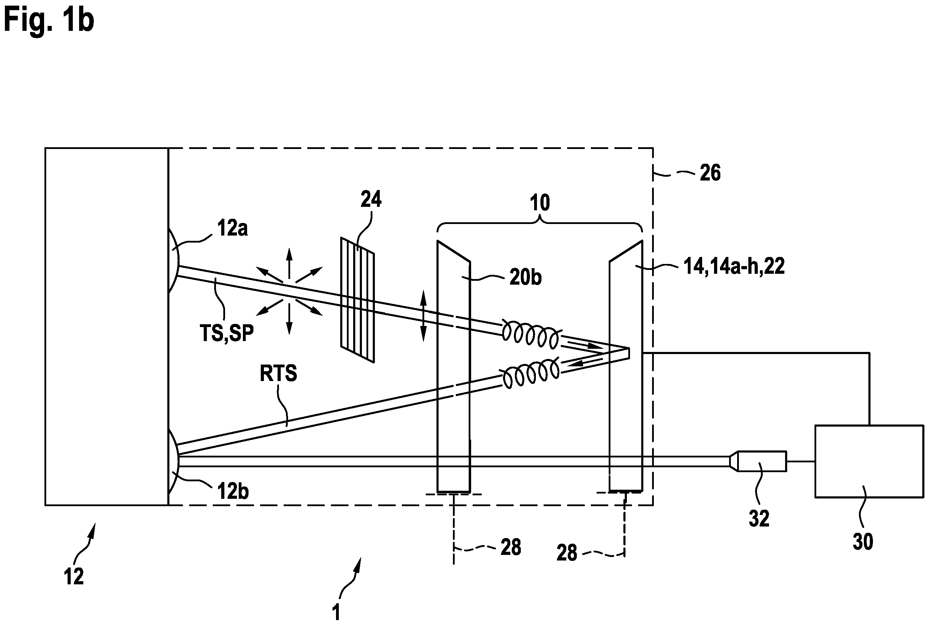

Fig. 1b zeigt eine schematische Darstellung des Testsystems für den LiDAR-Sensor mit der Vorrichtung zur Isolation des Triggersignals gemäß einer weiteren bevorzugten Ausführungsform der Erfindung.

Die in Fig. 1b gezeigte Anordnung unterscheidet sich von der in Fig. 1a gezeigten Anordnung darin, dass in dem Signalpfad SP des Triggersignals TS vor dem Verzögerungselement 20b ein Polarisator 24, insbesondere ein Linearpolarisator, angeordnet ist, da in der in Fig. 1b gezeigten Ausführungsform der LiDAR-Sensor ein unpolarisiertes Triggersignal TS aussendet.

Sollte das Triggersignal TS alternativ polarisiert sein, kann durch die Effizienz des optischen Isolators durch Verdrehen optimiert werden.

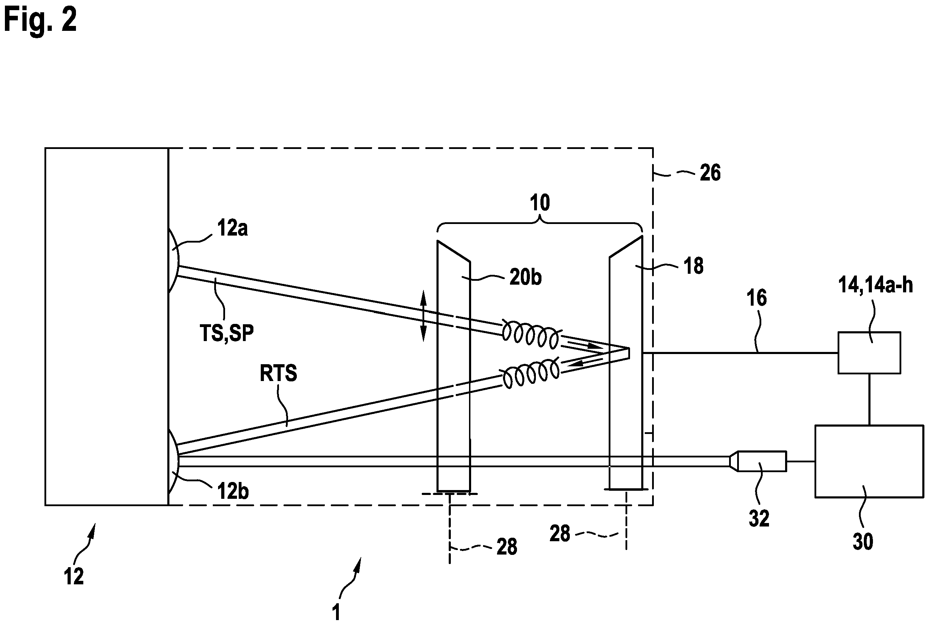

Fig. 2 zeigt eine schematische Darstellung des Testsystems für den LiDAR-Sensor mit der Vorrichtung zur Isolation des Triggersignals gemäß einer weiteren bevorzugten Ausführungsform der Erfindung.

Die Vorrichtung 10 zur Isolation eines Triggersignals für ein Testsystem 1 eines LiDAR-Sensors 12 umfasst eine mit einem Trigger-Detektor 14 durch ein optisches Übertragungsmedium 16 verbindbaren Sammellinse 18, wobei die Sammellinse 18 dazu eingerichtet ist, ein von einem LiDAR-Sensor 12 erzeugtes Triggersignal TS, insbesondere einen Laserpuls, zu empfangen.

Ferner umfasst die Vorrichtung 10 ein in einem Signalpfad SP des Triggersignals TS vor der Sammellinse 18 angeordnetes optischen Element 20b, welches dazu ausgebildet ist, das Triggersignal TS passieren zu lassen und eine, insbesondere an einer Oberfläche 22 reflektierte, Rückreflexion RTS des durch das optische Element 20a, 20b passierten Triggersignals TS zumindest teilweise zu absorbieren.

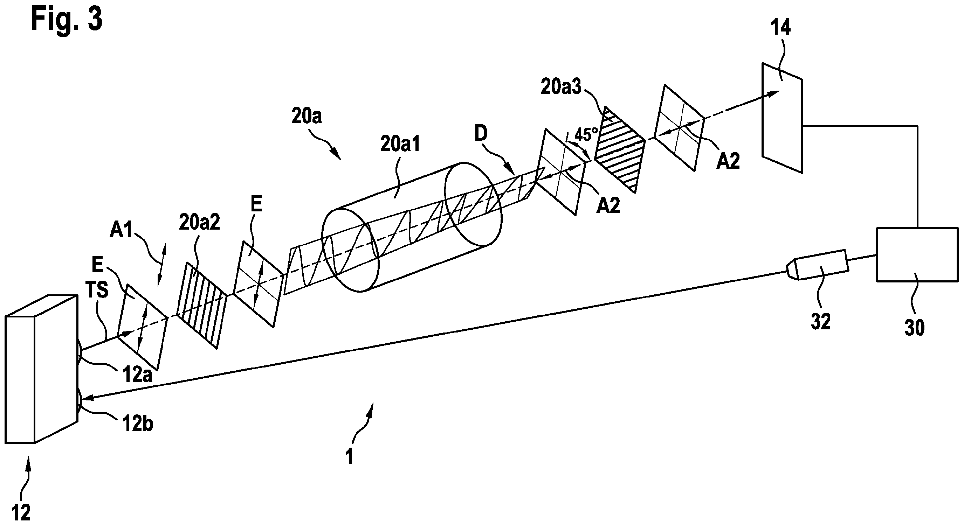

Fig. 3 zeigt eine schematische Darstellung des Testsystems für den LiDAR-Sensor mit der Vorrichtung zur Isolation des Triggersignals gemäß einer weiteren bevorzugten Ausführungsform der Erfindung.

Das optische Element 20a ist durch einen optischen Isolator 20a, insbesondere einen Faraday-Isolator, ausgebildet, wobei der optische Isolator 20a einen Faraday-Rotator 20al aufweist, welcher zwischen einem ersten Polarisator 20a2 und einem zweiten Polarisator 20a3 angeordnet ist.

Eine optische Achse A1 des ersten Polarisators 20a2 weist eine Ausrichtung auf, die mit einer Polarisationsebene E des Triggersignals TS übereinstimmt. Ferner ist der Faraday-Rotator 20al dazu ausgebildet, die Polarisation des Triggersignals TS um 45° in eine vorgegebene Drehrichtung D zu drehen. Des Weiteren ist eine optische Achse A2 des zweiten Polarisators um 45° in der vorgegebenen Drehrichtung D gegenüber dem ersten Polarisator 20a2 ausgerichtet.

Fig. 3 zeigt die Anordnung des optischen Elements 20a im Sendebereich der Sendeeinheit 12a des LiDAR-Sensors 12. Alternativ ist das optische Element 20a gleichzeitig auch im Abstrahlbereich der Sendeeinheit 32 der Signaleinheit 30 angeordnet. Aus Gründen der besseren Erkennbarkeit wurde auf eine Abbildung dieser Variante verzichtet.

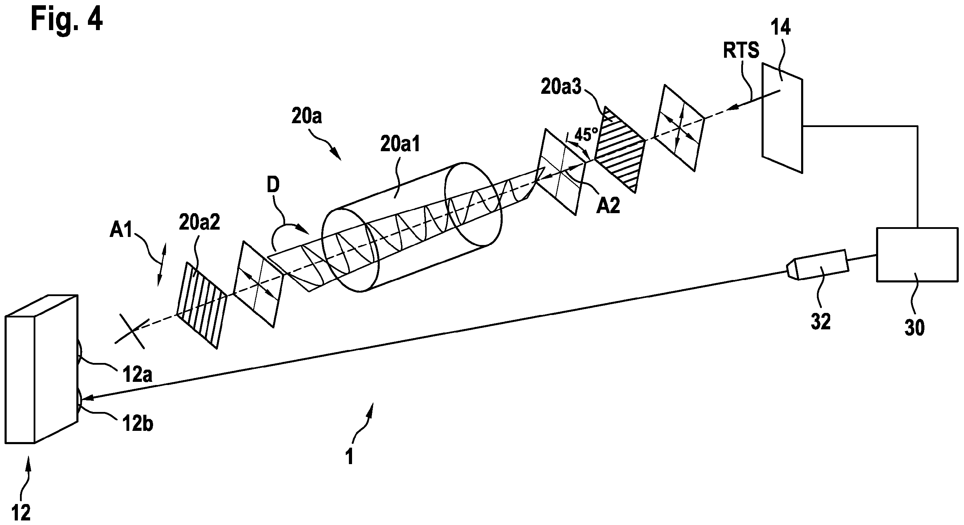

Fig. 4 zeigt eine schematische Darstellung des Testsystems für den LiDAR-Sensor mit der Vorrichtung zur Isolation des Triggersignals gemäß einer weiteren bevorzugten Ausführungsform der Erfindung.

Der Faraday-Rotator 20al ist dazu ausgebildet, die Polarisation der Rückreflexion RTS des durch den optischen Isolator 20a passierten Triggersignals TS um 45° in die vorgegebene Drehrichtung D zu drehen, so dass die den Faraday-Rotator 20al passierte Rückreflexion RTS orthogonal zur optischen Achse A1 des ersten Polarisators ausgerichtet ist.

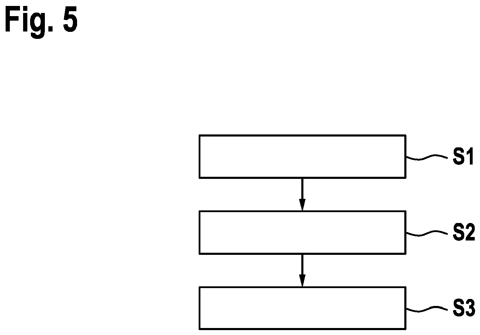

Fig. 5 zeigt ein Ablaufdiagramm eines Verfahrens zur Isolation eines Triggersignals für ein Testsystem eines LiDAR-Sensors gemäß der bevorzugten Ausführungsform der Erfindung.

Das Verfahren umfasst ein Empfangen S1 eines durch einen LiDAR-Sensor 12 erzeugten Triggersignals TS, insbesondere eines Laserpulses, durch eine durch ein optisches Übertragungsmedium 16 mit einem Trigger-Detektor 14 verbundene Sammellinse 18 oder durch einen Trigger-Detektor 14.

Das Verfahren umfasst ein Passieren S2 des Triggersignals TS durch ein in einem Signalpfad SP des Triggersignals TS vor der Sammellinse 18 oder dem Trigger-Detektor 14 angeordnetes optisches Element.

Darüber hinaus umfasst das Verfahren ein zumindest teilweises Absorbieren S3 einer, insbesondere an einer Oberfläche 22 reflektierten, Rückreflexion RTS des durch das optische Element 20a, 20b passierten Triggersignals TS mittels des optischen Elements 20a, 20b.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken.

Der LiDAR-Sensor kann beispielsweise durch ein mechanisch-rotierend abtastendes LiDAR ausgebildet sein. In diesem Fall wäre die Vorrichtung 10 zur Isolation des Triggersignals für das Testsystem 1 des LiDAR-Sensors 12 in einem Winkel von 360° um den LiDAR-Sensor 12 herum angeordnet.

Ferner sind manche Aspekte der in den Figuren 1a, lb, 2, 3 und 4 gezeigten Ausführungsformen jeweils auf die anderen Ausführungsformen übertragbar. Beispielsweise die mit Bezug auf Fig. 1a beschriebenen Merkmale, dass die optische Leistung der Rückreflexion RTS des durch das optische Element 20b passierten Triggersignals TS nach einem zweitmaligen Passieren durch das optische Element 20b unterhalb einer Detektionsschwelle eines Empfängers des LiDAR-Sensors 12 liegt, ist auf die in den Figuren lb, 2, 3 und 4 gezeigten Ausführungsformen übertragbar.

Ferner ist das Merkmal, dass das optische Element 20b dazu ausgebildet ist, eine optische Leistung des Triggersignals TS bei erstmaligem Durchgang durch das optische Element 20a, 20b um 50 - 70%, insbesondere um 65%, zu dämpfen. Ferner ist das optische Element 20b ist dazu ausgebildet, eine Gesamtdämpfung des Triggersignals TS und dessen erneut das optische Element 20b passierenden Rückreflexion RTS um mehr als 99%, insbesondere 99,9%, bereitzustellen, auf die in den Figuren lb, 2, 3 und 4 gezeigten Ausführungsformen übertragbar.

Darüber hinaus sind die Merkmale, dass das optische Element 20b und der Trigger-Detektor 14 in einer an einer Sendeeinheit 12a des LiDAR-Sensors 12 befestigbaren Abdeckhaube 26 angeordnet sind oder dass das optische Element 20b und der Trigger-Detektor 14 beispielsweise an einer in dem Signalpfad SP des Triggersignals TS angeordneten Trägereinrichtung 28 angeordnet sind, auf die in den Figuren lb, 2, 3 und 4 gezeigten Ausführungsformen übertragbar.

Des Weiteren sind die Merkmale, dass der Trigger-Detektor 14 eine vorgegebene Anzahl lichtempfindlicher Dioden 14a-14h aufweist, welche dazu eingerichtet sind, das empfangene Triggersignal TS als elektrisches Signal an einen Signalgenerator 30 zu übertragen, sowie dass das optische Element 20a, 20b zumindest im Bereich eines Öffnungswinkels der Sendeeinheit 12a des LiDAR-Sensors 12 angeordnet ist, auf die in den Figuren lb, 2, 3 und 4 gezeigten Ausführungsformen anwendbar.

### Bezugszeichenliste

- 1: Testsystem
- 10: Vorrichtung
- 12: LiDAR-Sensor
- 12a: Sendeeinheit
- 12b: Empfänger
- 14: Trigger-Detektor
- 14a-14h: lichtempfindliche Dioden
- 16: optisches Übertragungsmedium
- 18: Sammellinse
- 20a, 20b: optisches Element
- 20al: Faraday-Rotator
- 20a2: erster Polarisator
- 20a3: zweiter Polarisator
- 22: Oberfläche
- 24: Polarisator
- 26: Abdeckhaube
- 28: Trägereinrichtung
- 30: Signalgenerator
- 32: Sendeeinheit des Signalgenerators
- A1, A2: optische Achse
- D: Drehrichtung
- E: Polarisationsebene
- RTS: Rückreflexion des Triggersignals
- SP: Signalpfad
- S1-S3: Verfahrensschritte
- TS: Triggersignal

## Patentansprüche

1. Vorrichtung (10) zur Isolation eines Triggersignals für ein Testsystem (1) eines LiDAR-Sensors (12), mit einer mit einem Trigger-Detektor (14) durch ein optisches Übertragungsmedium (16) verbindbaren Sammellinse (18) oder einem Trigger-Detektor (14), wobei die Sammellinse (18) oder der Trigger-Detektor (14) dazu eingerichtet ist, ein von einem LiDAR-Sensor (12) erzeugtes Triggersignal (TS), insbesondere einen Laserpuls, zu empfangen; und einem in einem Signalpfad (SP) des Triggersignals (TS) vor der Sammellinse (18) oder dem Trigger-Detektor (14) angeordneten optischen Element (20a, 20b), welches dazu ausgebildet ist, das Triggersignal (TS) passieren zu lassen und eine, insbesondere an einer Oberfläche (22) reflektierte, Rückreflexion (RTS) des durch das optische Element (20a, 20b) passierten Triggersignals (TS) zumindest teilweise zu absorbieren.

2. Vorrichtung nach Anspruch 1, wobei das optische Element (20a, 20b) durch einen optischen Isolator (20a), insbesondere einen Faraday-Isolator, ausgebildet ist, wobei der optische Isolator (20a) einen Faraday-Rotator (20al) aufweist, welcher zwischen einem ersten Polarisator (20a2) und einem zweiten Polarisator (20a3) angeordnet ist.

3. Vorrichtung nach Anspruch 2, wobei eine optische Achse (A1) des ersten Polarisators (20a2) eine Ausrichtung aufweist, die mit einer Polarisationsebene (E) des Triggersignals (TS) übereinstimmt, wobei der Faraday-Rotator (20al) dazu ausgebildet ist, die Polarisation des Triggersignals (TS) um 45° in eine vorgegebene Drehrichtung (D) zu drehen, und wobei eine optische Achse (A2) des zweiten Polarisators um 45° in der vorgegebenen Drehrichtung (D) gegenüber dem ersten Polarisator (20a2) ausgerichtet ist.

4. Vorrichtung nach Anspruch 3, wobei der Faraday-Rotator (20al) dazu ausgebildet ist, die Polarisation der Rückreflexion (RTS) des durch den optischen Isolator (20a) passierten Triggersignals (TS) um 45° in die vorgegebene Drehrichtung (D) zu drehen, so dass die den Faraday-Rotator (20al) passierte Rückreflexion (RTS) orthogonal zur optischen Achse (A1) des ersten Polarisators ausgerichtet ist.

5. Vorrichtung nach Anspruch 1, wobei das optische Element (20a, 20b) durch ein Verzögerungselement (20b), insbesondere eine λ/4 Wellenplatte, ausgebildet ist, welche dazu ausgebildet ist, dass durch den LiDAR-Sensor (12) erzeugte, insbesondere linearpolarisierte, Triggersignal (TS) zu zirkularpolarisieren.

6. Vorrichtung nach Anspruch 5, wobei in dem Signalpfad (SP) des Triggersignals (TS) vor dem Verzögerungselement (20b) ein Polarisator (24), insbesondere ein Linearpolarisator, angeordnet ist.

7. Vorrichtung nach einem der vorhergehenden Ansprüche, wobei die optische Leistung der Rückreflexion (RTS) des durch das optische Element (20a, 20b) passierten Triggersignals (TS) nach einem zweitmaligen Passieren durch das optische Element (20a, 20b) unterhalb einer Detektionsschwelle eines Empfängers des LiDAR-Sensors (12) liegt.

8. Vorrichtung nach Anspruch 7, wobei das optische Element (20a, 20b) dazu ausgebildet ist, eine optische Leistung des Triggersignals (TS) bei erstmaligem Durchgang durch das optische Element (20a, 20b) um 50 - 70%, insbesondere um 65%, zu dämpfen, und eine Gesamtdämpfung des Triggersignals (TS) und dessen erneut das optische Element (20a, 20b) passierenden Rückreflexion (RTS) um mehr als 99%, insbesondere 99,9%, bereitzustellen.

9. Vorrichtung nach einem der vorhergehenden Ansprüche, wobei das optische Element (20a, 20b) und die Sammellinse (18) oder der Trigger-Detektor (14) in einer an einer Sendeeinheit (12a) des LiDAR-Sensors (12) befestigbaren Abdeckhaube (26) oder an einer in dem Signalpfad (SP) des Triggersignals (TS) angeordneten Trägereinrichtung (28) angeordnet sind.

10. Vorrichtung nach Anspruch 9, wobei der Trigger-Detektor (14) eine vorgegebene Anzahl lichtempfindlicher Dioden (14a-14h) aufweist, welche dazu eingerichtet sind, das empfangene Triggersignal (TS) als elektrisches Signal an einen Signalgenerator (30) zu übertragen.

11. Vorrichtung nach Anspruch 9 oder 10, wobei das optische Element (20a, 20b) zumindest im Bereich eines Öffnungswinkels der Sendeeinheit (12a) des LiDAR-Sensors (12) angeordnet ist.

12. Testsystem (1) für einen LiDAR-Sensor (12), mit einem ein Triggersignal (TS) erzeugenden LiDAR-Sensor (12);
einer Vorrichtung (10) zur Isolation des Triggersignals (TS) nach einem der Ansprüche 1 bis 10; und
einem Signalgenerator (30), wobei der Trigger-Detektor (14) dazu eingerichtet ist, in Reaktion auf den Empfang des Triggersignals (TS) des zu testenden LiDAR-Sensors (12) den Signalgenerator (30) anzusteuern, eine simulierte Rückreflexion (RTS) des Triggersignals (TS) zu erzeugen und unter Verwendung einer vorgegebenen Anzahl lichtempfindlicher Dioden (14a-14h) an einen Empfänger (12b) des LiDAR-Sensors (12) auszusenden.

13. Testsystem (1) nach Anspruch 12, wobei der LiDAR-Sensor (12) durch ein Flash-LiDAR oder ein mechanisch-rotierend abtastendes LiDAR ausgebildet ist.

14. Verfahren zur Isolation eines Triggersignals für ein Testsystem (1) eines LiDAR-Sensors (12), mit den Schritten:
Empfangen (S1) eines durch einen LiDAR-Sensor (12) erzeugten Triggersignals (TS), insbesondere eines Laserpulses, durch eine durch ein optisches Übertragungsmedium (16) mit einem Trigger-Detektor (14) verbundenen Sammellinse (18) oder durch einen Trigger-Detektor (14);
Passieren (S2) des Triggersignals (TS) durch ein in einem Signalpfad (SP) des Triggersignals (TS) vor der Sammellinse (18) oder dem Trigger-Detektor (14) angeordnetes optisches Element; und
zumindest teilweises Absorbieren (S3) einer, insbesondere an einer Oberfläche (22) reflektierten, Rückreflexion (RTS) des durch das optische Element (20a, 20b) passierten, Triggersignals (TS) mittels des optischen Elements (20a, 20b).
